# EUROPEAN PATENT APPLICATION

(11) **EP 4 462 576 A1**
(43) Date of publication of application: **13.11.2024**
(21) Application number: 24155980.6
(22) Date of filing: 06.02.2024
(51) Int. Cl.: H01M 50/30

(54) **ENERGY STORAGE SYSTEM FOR AN AIRCRAFT HAVING A VENTILATION SYSTEM**

(30) Priority: 13.04.2023 US 202318299751
(71) Applicant: General Electric Company, Schenectady, NY 12345 (US)
(72) Inventor: DO, Kevin Michael, Evendale, 45241 (US)
(74) Representative: Openshaw & Co.

(57) **Abstract**

An energy storage system (200, 300, 400, 500) for an aircraft (10) includes an enclosure (202, 302, 402, 502) comprising at least one vent hole (204, 304, 404, 504); a plurality of energy storage devices (206, 206, 406, 506) arranged in the enclosure (202, 302, 402, 502); a ventilation system comprising: an electrical circuit (210, 310, 410, 510) comprising at least one conductor (212, 312, 412, 512) arranged across the plurality of energy storage devices (206, 206, 406, 506); a power source (214, 314, 414, 514) electrically coupled to and powering the electrical circuit (210, 310, 410, 510); and a thermal vent mechanism (216, 316, 416, 516) positioned adjacent to the at least one vent hole (204, 304, 404, 504). During normal operation, the electrical circuit (210, 310, 410, 510) is open and the thermal vent mechanism (216, 316, 416, 516) covers the at least one vent hole (204, 304, 404, 504). During a thermal event, the thermal event causes the electrical circuit (210, 310, 410, 510) to close such that the power source (214, 314, 414, 514) activates the thermal vent mechanism (216, 316, 416, 516) to expose the at least one vent hole (204, 304, 404, 504) to vent fumes outside of the aircraft (10).

## Description

This invention was made with Government support under Contract No. 80AFRC-21-C-A021 awarded by the National Aeronautics and Space Administration (NASA). The Government has certain rights in this invention.

### FIELD

The present subject matter relates generally to aircraft and more particularly to an energy storage system for an aircraft including an improved ventilation system.

### BACKGROUND

A conventional commercial aircraft generally includes a fuselage, a pair of wings, and a propulsion system that provides thrust. The propulsion syst em typically includes at least two aircraft engines, such as turbofan jet engines. Each turbofan jet engine is mounted to a respective one of the wings of the aircraft, such as in a suspended position beneath the wing, separated from the wing and fuselage. Such a configuration allows for the turbofan jet engines to interact with separate, freestream airflows that are not impacted by the wings and/or fuselage.

Many aircraft may also include one or more energy storage devices, such as batteries or ultracapacitors housed in an enclosure, to assist with various start-up operations (e.g., to augment start-up power requirements). Such energy storage devices can be subject to certain aircraft regulations that prohibit flammable, toxic, or corrosive gases, smoke, soot, or particulates, or fluids from being emitted therefrom during aircraft operation. In particular, for many higher energy devices, regulations may require overboard venting of the enclosure.

### BRIEF DESCRIPTION OF THE DRAWINGS

A full and enabling disclosure of the presently described technology, including the best mode thereof, directed to one of ordinary skill in the art, is set forth in the specification, which makes reference to the appended figures, in which:
FIG. 1 illustrate a top view of an aircraft according to various exemplary embodiments of the present disclosure.
FIG. 2 illustrate a port side view of the exemplary aircraft of FIG. 1.
FIG. 3 illustrate a cross section view of an engine of an aircraft in accordance with an exemplary embodiment of the present disclosure.
FIG. 4 illustrate a top view of an aircraft according to various exemplary embodiments of the present disclosure.
FIG. 5A-5C illustrate various views of an energy storage system for an aircraft in accordance with an exemplary embodiment of the present disclosure.
FIG. 6A-6C illustrate various views of an energy storage system for an aircraft in accordance with another exemplary embodiment of the present disclosure.
FIG. 7A-7C illustrate various views of an energy storage system for an aircraft in accordance with still another exemplary embodiment of the present disclosure.
FIG. 8A-8C illustrate various views of an energy storage system for an aircraft in accordance with yet another exemplary embodiment of the present disclosure.
FIG. 9 illustrates a flow diagram of a method of ventilating an energy storage system of an aircraft to a location outside of the aircraft in accordance with an exemplary aspect of the present disclosure.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components.

The terms "forward" and "aft" refer to relative positions within an engine or vehicle, and refer to the normal operational attitude of the engine vehicle. For example, with regard to an engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

The singular forms "a", "an", and "the" include plural references unless the context clearly dictates otherwise.

The terms "coupled," "fixed," "attached to," and the like refer to both direct coupling, fixing, or attaching, as well as indirect coupling, fixing, or attaching through one or more intermediate components or features, unless otherwise specified herein.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a ten percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

The present disclosure is related generally to an energy storage system for an aircraft having improved ventilation. In an embodiment, the energy storage system includes an enclosure having at least one vent hole and a plurality of energy storage devices arranged in the enclosure. Further, the energy storage system includes a ventilation system having an electrical circuit with at least one conductor arranged across the energy storage devices. Moreover, the energy storage system includes a power source electrically coupled to and powering the electrical circuit and a thermal vent mechanism positioned adjacent to the vent hole. Thus, during normal or standard operation (i.e., during standard temperatures), the electrical circuit is open, and the thermal vent mechanism covers the vent hole. However, during a thermal event such as a fire, explosion, etc., heat from the thermal event causes the electrical circuit to close such that the power source activates the thermal vent mechanism to expose the at least one vent hole to vent fumes outside of the aircraft.

Accordingly, the energy storage system and ventilation system of the present disclosure utilizes the electrical circuit, such as an analog circuit, that is triggered by heat from the thermal event within the enclosure. In an embodiment, the electrical circuit may be powered by a power source, such as a direct current (DC) power source or an alternating current (AC) power source with high current capability to actuate the thermal vent. Thus, the electrical circuit is configured to trigger the thermal vent mechanism to vent fumes from the thermal event overboard.

In an embodiment, the energy storage system may employ a passive electric circuit, with low temperature, low melting point insulating materials that are triggered by heat from the thermal event. In other words, in an embodiment, the conductor of the electrical circuit may include low temperature insulation for early detection. In such embodiments, for example, the thermal vent mechanism may be a thermal membrane with a resistance heating wire embedded therein, such that heating the wire melts the membrane to enable venting of the fumes.

In another embodiment, the energy storage system may employ an active electric circuit. In such embodiments, the thermal vent mechanism may be a hinged door actuated by an actuator, such as a thermal fuse or electro-magnet, with a spring actuated lock. In yet another embodiment, the thermal vent mechanism may be a rotary disc(s) actuated by an actuator, such as a thermal fuse or electro-magnet, and a rotary spring to actuate the rotary disc(s) to align with the vent hole(s).

For example, in an embodiment, the passive electric circuit may include the conductor having single-wire or double-wire conductor configurations, and a latching relay to the thermal vent mechanism. In an embodiment, for example, a single wire system may be configured to fault to ground through one or more insulated clamps. In such embodiments, ground may be isolated or tied to common airframe ground with the enclosure. Furthermore, in an embodiment, a two-wire system may utilize low temperature insulation such that detection is created by completion of the circuit between the two wires.

As such, the thermal vent mechanism is robust to aging and deterioration from non-use and does not require routine maintenance. The thermal vent mechanism is also insensitive to environmental conditions such as vibration, acoustics, and/or pressure changes between altitude and cabin, during normal climb and descent rates. In further embodiments, the enclosure may also employ a one-way vent, to allow the enclosure to vent overboard, while also preventing contaminants from entering the cabin after de-pressurization and delta pressure equalization between cabin and ambient. Moreover, in an embodiment, the energy storage system and ventilation system of the present disclosure can accommodate batteries and/or other energy storage devices of varying energy densities and is also insensitive to the distance between a location of the thermal event and the one or more vents and pressure differences at altitude.

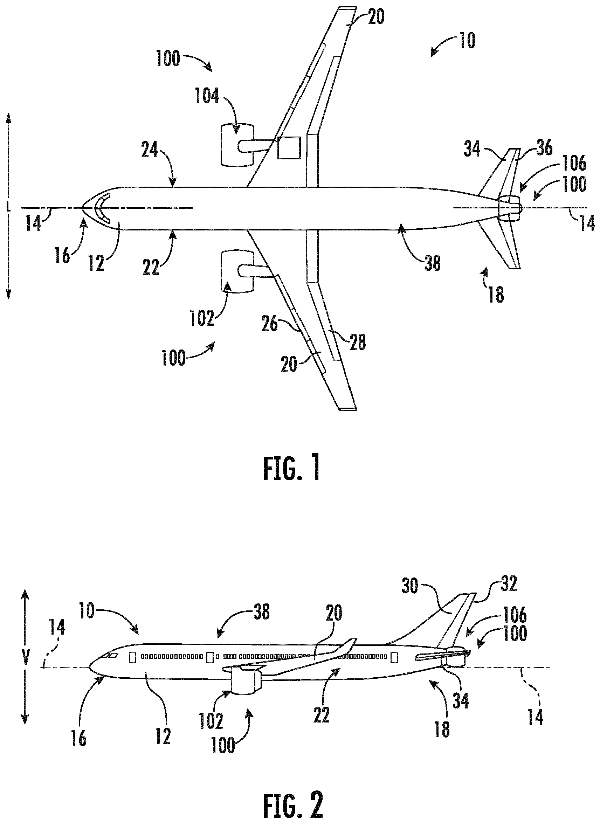

Referring now to the drawings, wherein identical numerals indicate the same elements throughout the figures, FIG. 1 provides a top view of an exemplary aircraft 10 as may incorporate various embodiments of the present disclosure. FIG. 2 provides a port side view of the aircraft 10 as illustrated in FIG. 1. As shown in FIGS. 1 and 2 collectively, the aircraft 10 defines a longitudinal centerline 14 that extends therethrough, a vertical direction V, a lateral direction L, a forward end 16, and an aft end 18.

Moreover, the aircraft 10 includes a fuselage 12, extending longitudinally from the forward end 16 of the aircraft 10 towards the aft end 18 of the aircraft 10, and a pair of wings 20. As used herein, the term "fuselage" generally includes all of the body of the aircraft 10, such as an empennage of the aircraft 10. The first of such wings 20 extends laterally outwardly with respect to the longitudinal centerline 14 from a port side 22 of the fuselage 12 and the second of such wings 20 extends laterally outwardly with respect to the longitudinal centerline 14 from a starboard side 24 of the fuselage 12. Each of the wings 20 for the exemplary embodiment depicted includes one or more leading edge flaps 26 and one or more trailing edge flaps 28. The aircraft 10 further includes a vertical stabilizer 30 having a rudder flap 32 for yaw control, and a pair of horizontal stabilizers 34, each having an elevator flap 36 for pitch control. The fuselage 12 additionally includes an outer surface or skin 38. It should be appreciated, however, that in other exemplary embodiments of the present disclosure, the aircraft 10 may additionally or alternatively include any other suitable configuration of stabilizer that may or may not extend directly along the vertical direction V or horizontal/ lateral direction L.

Referring to FIGS. 1 and 2, the aircraft 10 includes one or more aircraft engines 100. More specifically, for the embodiment depicted in FIGS. 1 and 2, one or more of the aircraft engines 100 may be configured as gas turbine engines, or rather as turbofan jet engines 102, 104 attached to and suspended beneath the wings 20 in an under-wing configuration. Additionally, one or more of the aircraft engines may be configured as a hybrid-electric propulsion engine 106 mounted at the aft end of the aircraft 10.

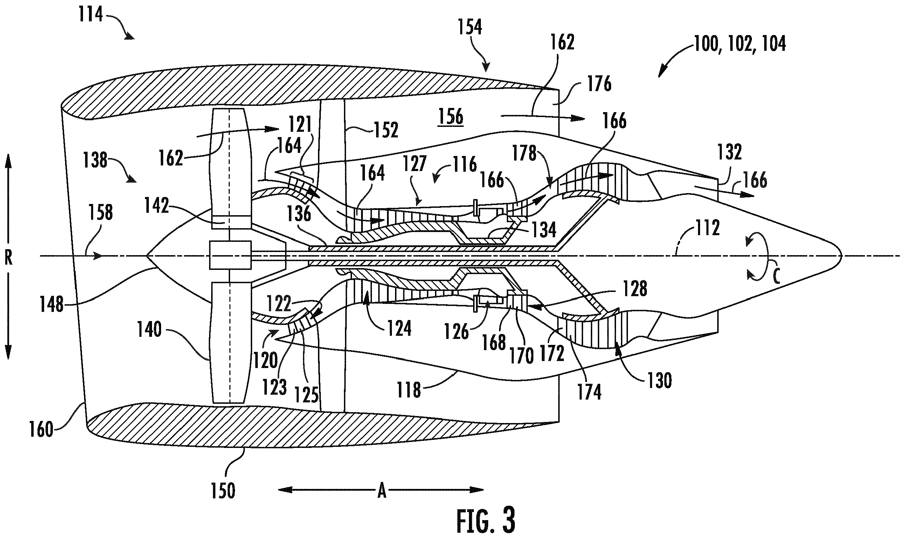

Referring now to FIG. 3, a schematic cross-sectional view of one of the aircraft engines 100, such as the turbofan jet engines 102, 104, in accordance with an exemplary aspect of the present disclosure is illustrated. It should be understood that the aircraft engine 100 of FIG. 3 is described for illustrative purposes only and is not meant to be limiting. Thus, one of ordinary skill in the art would appreciate that the ventilation system of the present disclosure described herein can be employed with a purely electric aircraft, a hybrid electric aircraft, or a traditional mechanical aircraft.

As shown in FIG. 3, the aircraft engine 100 defines an axial direction A (extending parallel to a longitudinal centerline 112 provided for reference), a circumferential direction C (extending about the longitudinal centerline 112 and the axial direction A), and a radial direction R. In general, the aircraft engine 100 includes a fan section 114 and a core turbine engine 116 disposed downstream from the fan section 114.

The exemplary core turbine engine 116 depicted generally includes a substantially tubular outer casing 118 that defines an annular inlet 120. The outer casing 118 encases, in serial flow relationship, a compressor section including a booster or low pressure (LP) compressor 122 and a high pressure (HP) compressor 124; a combustion section 126; a turbine section including a high pressure (HP) turbine 128 and a low pressure (LP) turbine 130; and a jet exhaust nozzle section 132. A high pressure (HP) shaft or spool 134 drivingly connects the HP turbine 128 to the HP compressor 124. A low pressure (LP) shaft or spool 136 drivingly connects the LP turbine 130 to the LP compressor 122.

For the depicted embodiment, as shown particularly in FIG. 3, fan section 114 includes a fan assembly 115 having a fan 138 with a plurality of fan blades 140 coupled to a disk 142 or hub in a spaced apart manner. As depicted, fan blades 140 extend outward from disk 142 generally along the radial direction R. The fan blades 140 and disk 142 are together rotatable about the longitudinal centerline 112 by LP shaft 136. As such, the disk 142 may also be referred to as a rotor disk. In some embodiments, a power gearbox having a plurality of gears may be included for stepping down the rotational speed of the LP shaft 136 to a more efficient rotational fan speed.

Referring still to the exemplary embodiment of FIG. 3, the disk 142 is covered by a rotatable front hub 148 or nacelle aerodynamically contoured to promote an airflow through the plurality of fan blades 140. Additionally, the exemplary fan section 114 includes an annular fan casing 150 or outer nacelle that circumferentially surrounds the fan assembly 115 and/or at least a portion of the core turbine engine 116. It should be appreciated that fan casing 150 (nacelle) may be configured to be supported relative to the core turbine engine 116 by a plurality of circumferentially spaced outlet guide vanes 152. Moreover, a downstream section 154 of the fan casing 150 may extend over an outer portion of the core turbine engine 116 to define a bypass airflow passage 156 therebetween.

During operation of the aircraft engine 100, a volume of air 158 enters aircraft engine 100 through an associated inlet 160 of the fan casing 150 and/or fan section 114. As the volume of air 158 passes across fan blades 140, a first portion of the air 158 as indicated by arrows 162 is directed or routed into the bypass airflow passage 156 and a second portion of the air 158 as indicated by arrows 164 is directed or routed into the LP compressor 122. The ratio between the first portion of air 162 and the second portion of air 164 is commonly known as a bypass ratio.

The pressure of the second portion of air 164 is then increased as it is routed through the compressor section and into the combustion section 126, where it is mixed with fuel and burned to provide combustion gases 166. More particularly, the compressor section includes the LP compressor 122 and the HP compressor 124 that each may comprise a plurality of compressor stages 121, with each stage 121 including both an annular array or circumferential row of stationary compressor vanes 123 (also referred to as compressor stator vanes 123) and an annular array or circumferential row of rotating compressor blades 125 (also referred to as compressor rotor blades 125) positioned immediately downstream of the compressor vanes 123.

The plurality of compressor blades 125 in the LP compressor 122 are coupled to the LP shaft or spool 136, and the plurality of compressor blades 125 in the HP compressor 124 are coupled to the HP shaft or spool 134. The plurality of compressor vanes 123 in the LP compressor 122 are coupled to a compressor casing, and the plurality of compressor vanes 123 in the HP compressor 124 are coupled to a compressor casing; at least a portion of the HP compressor vanes 123 are coupled to a compressor casing 127. In some embodiments, the compressor casing 127 may extend through both the LP compressor 122 and the HP compressor 124 and support all of the compressor vanes 123. In other embodiments, the compressor casing 127 supports only a portion of the compressor vanes 123 and may support only a portion of the compressor vanes 123 in the HP compressor 124. As previously described, as the second portion of air 164 passes through the sequential stages of compressor vanes 123 and blades 125, the volume of air 164 is pressurized, i.e., the pressure of the air 164 is increased prior to combustion with fuel in the combustion section 126 to form the combustion gases 166.

The combustion gases 166 are routed through the HP turbine 128 where a portion of thermal and/or kinetic energy from the combustion gases 166 is extracted via sequential stages of HP turbine stator vanes 168 that are coupled to the outer casing 118 and HP turbine rotor blades 170 that are coupled to the HP shaft or spool 134, thus causing the HP shaft or spool 134 to rotate, which supports operation of the HP compressor 124. The combustion gases 166 are then routed through the LP turbine 130 where a second portion of thermal and kinetic energy is extracted from the combustion gases 166 via sequential stages of LP turbine stator vanes 172 that are coupled to the outer casing 118 and LP turbine rotor blades 174 that are coupled to the LP shaft or spool 136, thus causing the LP shaft or spool 136 to rotate, which supports operation of the LP compressor 122 and/or rotation of the fan 138.

The combustion gases 166 are subsequently routed through the jet exhaust nozzle section 132 of the core turbine engine 116 to provide propulsive thrust. Simultaneously, the pressure of the first portion of air 162 is substantially increased as the first portion of air 162 is routed through the bypass airflow passage 156 before it is exhausted from a fan nozzle exhaust section 176 of the aircraft engine 100, also providing propulsive thrust. The HP turbine 128, the LP turbine 130, and the jet exhaust nozzle section 132 at least partially define a hot gas path 178 for routing the combustion gases 166 through the core turbine engine 116.

Although the aircraft engine 100 of FIG. 3 is depicted in a turboshaft configuration, it will be appreciated that the teachings of the present disclosure can apply to other types of turbine engines, turbomachines more generally, and other shaft systems. For example, the turbine engine may be another suitable type of gas turbine engine, such as e.g., a turboprop, turbojet, turbofan, aeroderivatives, etc.

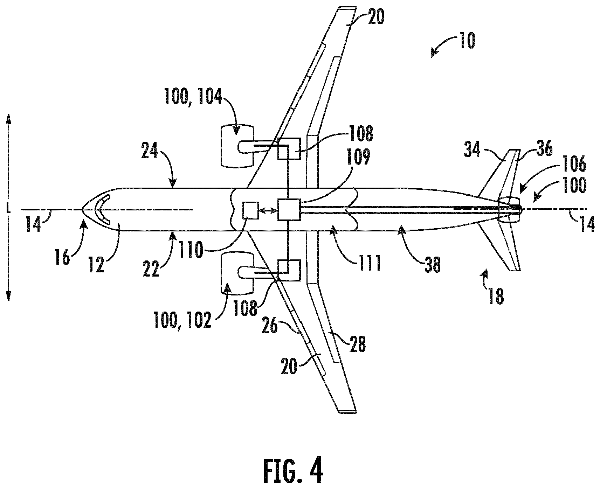

Referring now to FIG. 4, the aircraft 10 described herein may also utilize any other suitable electrical power source. For example, as shown in the embodiment of FIG. 4, the aircraft 10 may include one or more electric generators 108 operable with the jet engines 102, 104. For example, one or both of the jet engines 102, 104 may be configured to provide mechanical power from a rotating shaft (such as an LP shaft or an HP shaft) to the electric generators 108. Although depicted schematically outside the respective jet engines 102, 104, in certain embodiments, the electric generators 108 may be positioned within a respective jet engine 102, 104. Additionally, the electric generators 108 may be configured to convert the mechanical power to electrical power.

In addition, as shown in FIG. 4, the aircraft 10 may include a power conditioner 109 and an energy storage system 110. Thus, in an embodiment, the electric generators 108 may send electrical power to the power conditioner 109, which may transform the electrical energy to a proper form and either store the energy in the energy storage system 110 or send the electrical energy to the aircraft engines 100. For the embodiment depicted, the electric generators 108, the power conditioner 109, the energy storage system 110, and the aircraft engines 100 are all are connected to an electric communication bus 111, such that the electric generator 108 may be in electrical communication with the aircraft engines 100 and/or the energy storage system 110, and such that the electric generator 108 may provide electrical power to one or both of the energy storage system 110 or the aircraft engines 100.

Thus, in an embodiment, the electric generator 108, the power conditioner 109, and/or the energy storage system 110 may configured to augment start-up power requirements. As mentioned, however, such energy storage devices can be subject to certain aircraft regulations that prohibit flammable, toxic, or corrosive gases, smoke, soot, or particulates, or fluids from being emitted therefrom during aircraft operation. In particular, for many higher energy devices, regulations may require overboard venting of the enclosure.

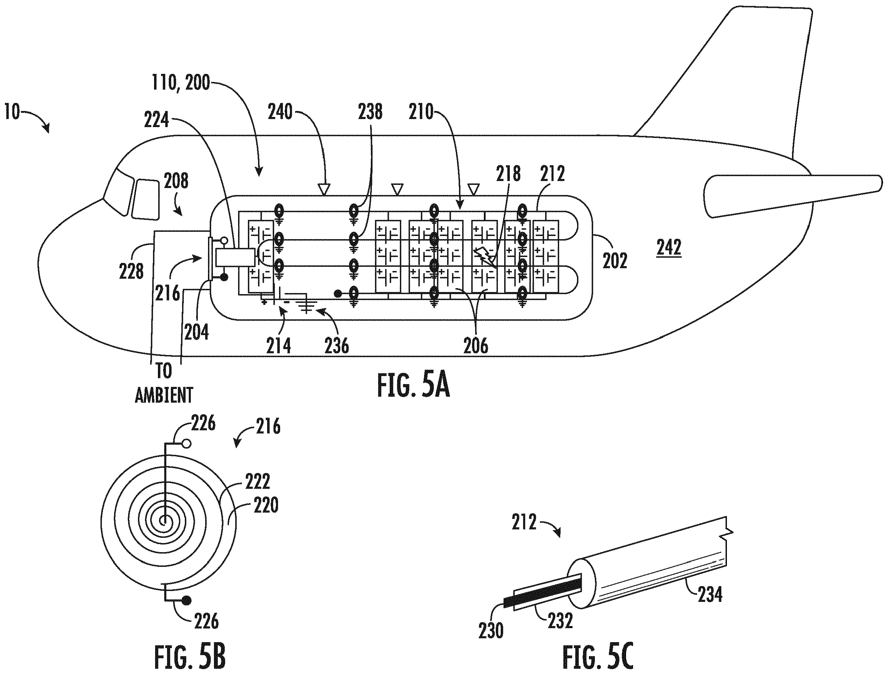

Accordingly, and referring now to FIGS. 5A-8C, various diagrams of multiple embodiments of an energy storage system, such as the energy storage system 110, for the aircraft 10 in accordance with an exemplary aspect of the present disclosure are illustrated. In particular, FIGS. 5A-5C illustrate a schematic diagram of an embodiment of an energy storage system 200, such as the energy storage system 110, for the aircraft 10 in accordance with an exemplary aspect of the present disclosure. In particular, as shown in FIGS. 5A-5C, the energy storage system 200 includes an enclosure 202 having at least one vent hole 204. Furthermore, as shown in FIGS. 5A-5C, the energy storage system 200 includes a plurality of energy storage devices 206 arranged in the enclosure 202. For example, in an embodiment, the plurality of energy storage devices described herein may include batteries, ultracapacitors, or any other suitable energy storage device.

In addition, as shown in FIG. 5A, the energy storage system 200 includes a ventilation system 208. In particular embodiments, as shown, the ventilation system 208 includes an electrical circuit 210 having at least one conductor 212 arranged across the plurality of energy storage devices 206. For example, as shown in FIGS. 5A and 5C, the conductor 212 is a single wire conductor having a first conductive wire 230, a first insulator 232 around the first conductive wire 230, and a sheathing 234 around the first insulator 232. The first insulator 232 (and any other insulators described herein) may be constructed of any suitable material, such as cellulose fiber material (e.g., paper), a foam material, or a polymer material (e.g., polyvinyl chloride (PVC)).

Moreover, as shown in FIG. 5A, the ventilation system 208 includes a power source 214 electrically coupled to and powering the electrical circuit 210. Further, as shown in FIG. 5A, the ventilation system 208 includes a thermal vent mechanism 216 positioned adjacent to the vent hole(s) 204. Thus, in an embodiment, during normal operation, the electrical circuit 210 is open and the thermal vent mechanism 216 covers the vent hole(s) 204. However, during a thermal event (as indicated by thermal symbol 218), the thermal event causes the electrical circuit 210 to close such that the power source 214 activates the thermal vent mechanism 216 to expose the vent hole(s) 204 to vent fumes outside of the aircraft 10. In particular embodiments, during the thermal event, the thermal event compromises the first insulator 232 (FIG. 5C), thereby faulting the first conductive wire 230 to ground 236 and closing the electrical circuit 210. Furthermore, in an embodiment, as shown in FIG. 5A, the first conductive wire 230 may be faulted to ground 236 via one or more insulated clamps 238. In such embodiments, ground 236 may be isolated or tied to common airframe ground with the enclosure 202.

Moreover, as shown in FIG. 5B, the thermal vent mechanism 216 may include a thermal membrane 220 having a resistance heating wire 222 embedded therein. Further, as shown in FIG. 5A, the ventilation system 208 may also include a latching relay 224 electrically coupled to the thermal vent mechanism 216, e.g., via one or more electrical connections 226 (FIG. 5B). As such, during the thermal event, the electrical circuit 210 is activated by short to ground and the latching relay 224. In addition, the resistance heating wire 222 is configured to heat and melt the thermal membrane 220, thereby activating the thermal vent mechanism 216 to expose the vent hole(s) 204 to vent fumes outside of the aircraft 10.

More particularly, during normal operations, the thermal membrane 220 is configured to seal the vent hole(s) 204 shut. However, when the thermal membrane 220 is melted due to the thermal event, the fumes are allowed to escape the enclosure 202 and can escape outside of the aircraft 10 via, e.g., a vent tube 228. For example, as shown in FIG. 5A, the vent tube 228 is arranged between the vent hole(s) 204 of the enclosure 202 and the outside of the aircraft 10. Thus, the vent tube 228 is configured for venting the fumes from within the enclosure 202 to the outside of the aircraft 10 during the thermal event. In additional embodiments, and still referring to FIG. 5A, the ventilation system 208 may also include one or more one-way vents 240 in the enclosure 202 to prevent the fumes from escaping into a cabin 242 of the aircraft 10.

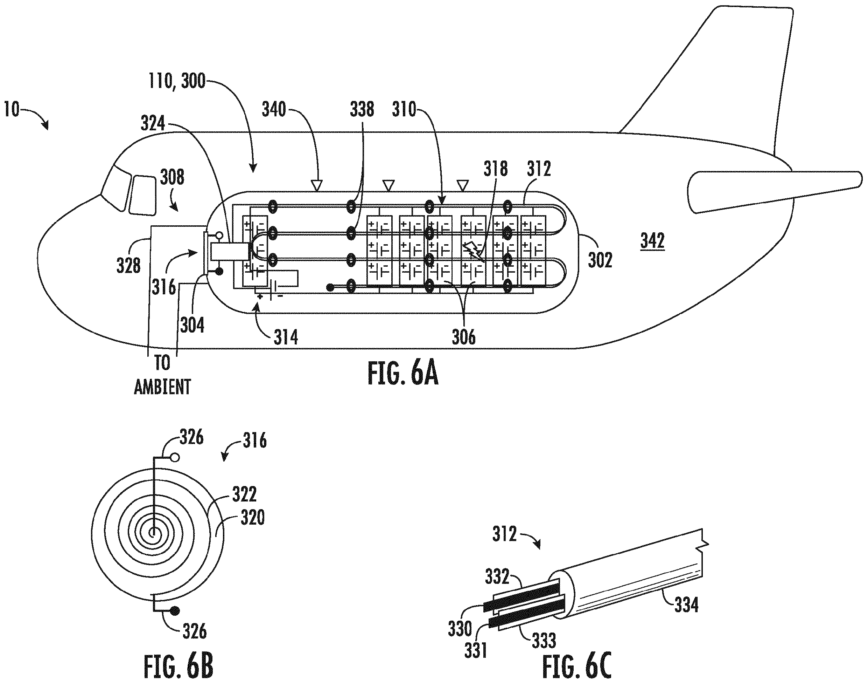

In further embodiments, as shown in FIGS. 6A-6C, a schematic diagram of another embodiment of an energy storage system 300, such as the energy storage system 110, for the aircraft 10 in accordance with an exemplary aspect of the present disclosure. The energy storage system 300 of FIGS. 6A-6C is similar to the energy storage system 200 of FIGS. 5A-5C, except the energy storage system 300 of FIGS. 6A-6C is not grounded and contains a double-wire, rather than a single-wire, conductor. Thus, as shown in FIGS. 6A-6C, the energy storage system 300 includes an enclosure 302 having at least one vent hole 304. Furthermore, as shown, the energy storage system 300 includes a plurality of energy storage devices 306 arranged in the enclosure 302.

Furthermore, as shown, the energy storage system 300 of FIGS. 6A-6C includes a ventilation system 308. In particular embodiments, as shown, the ventilation system 308 includes an electrical circuit 310 having at least one conductor 312 arranged across the plurality of energy storage devices 306. For example, as shown in FIGS. 6A and 6C, the conductor 312 is a double wire conductor having a first conductive wire 330, a second conductive wire 331, a first insulator 332 around the first conductive wire 330, a second insulator 333 around the second conductive wire 331, and a sheathing 334 around the first and second insulators 332, 333.

Moreover, as shown in FIG. 6A, the ventilation system 308 includes a power source 314 electrically coupled to and powering the electrical circuit 310. Further, as shown in FIG. 6A, the ventilation system 308 includes a thermal vent mechanism 316 positioned adjacent to the vent hole(s) 304. Thus, in an embodiment, during normal operation, the electrical circuit 310 is open and the thermal vent mechanism 316 covers the vent hole(s) 304. However, during a thermal event (as indicated by thermal symbol 318), the thermal event causes the electrical circuit 310 to close such that the power source 314 activates the thermal vent mechanism 316 to expose the vent hole(s) 304 to vent fumes outside of the aircraft 10. Accordingly, in particular embodiments, during the thermal event, the thermal event compromises the first insulator 332 and/or the second insulator 333, thereby causing the first and second conductive wires 330, 331 to touch and close the electrical circuit 310. In other words, the two-wire system utilizes low temperature insulation and detection of the thermal event is created by completion of the electrical circuit 310 between the first and second conductive wires 330, 331. In such embodiments, as shown, the ventilation system 308 may also include one or more insulated clamps 338, however, such clamps 338 may or may not be grounded.

In further embodiments, as shown in FIG. 6B (and similar to the embodiment of FIG. 5B), the thermal vent mechanism 316 may include a thermal membrane 320 having a resistance heating wire 322 embedded therein. Moreover, as shown in FIG. 6A, the ventilation system 308 may also include a latching relay 324 electrically coupled to the thermal vent mechanism 316, e.g., via one or more electrical connections 326 (FIG. 6B). As such, during the thermal event, the electrical circuit 310 is activated by short to ground and the latching relay 324. In addition, the resistance heating wire 322 is configured to heat and melt the thermal membrane 320 to activate the thermal vent mechanism 316 to expose the vent hole(s) 304 to vent fumes outside of the aircraft 10.

More particularly, during normal operations, the thermal membrane 320 is configured to seal the vent hole(s) 304 shut, however, when the thermal membrane 320 is melted due to the thermal event, the fumes are allowed to escape the enclosure 302 and can escape outside of the aircraft 10 via, e.g., a vent tube 328. For example, as shown in FIG. 6A, the vent tube 328 is arranged between the vent hole(s) 304 of the enclosure 302 and the outside of the aircraft 10. Thus, the vent tube 328 is configured for venting the fumes from within the enclosure 302 to the outside of the aircraft 10 during the thermal event. In additional embodiments, and still referring to FIG. 6A, the ventilation system 308 may also include one or more one-way vents 340 in the enclosure 302 to prevent the fumes from escaping into a cabin 342 of the aircraft 10.

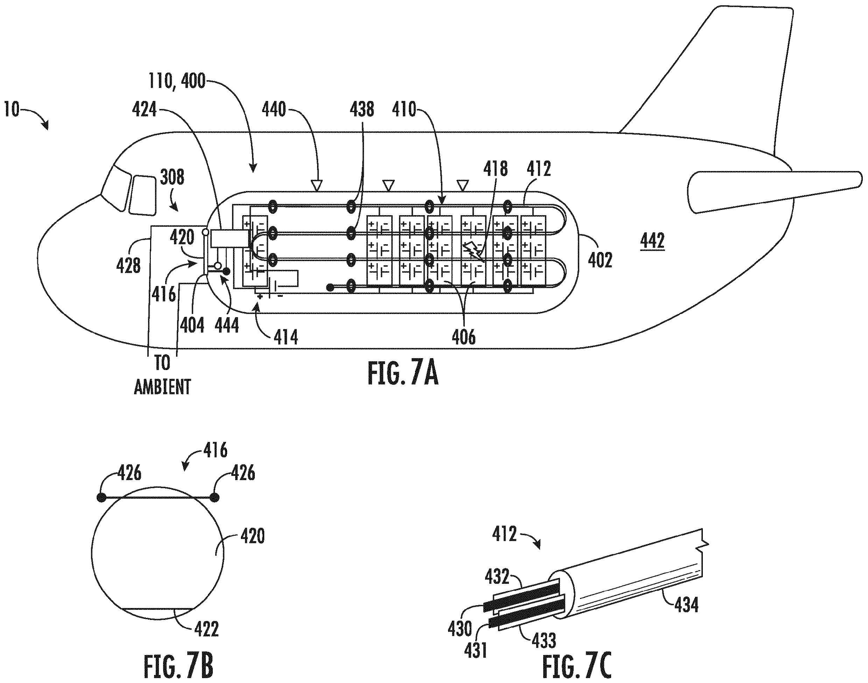

In further embodiments, as shown in FIGS. 7A-7C, a schematic diagram of another embodiment of an energy storage system 400, such as the energy storage system 110, for the aircraft 10 in accordance with an exemplary aspect of the present disclosure. In particular, as shown in FIGS. 7A-7C, the energy storage system 400 includes an enclosure 402 having at least one vent hole 404. Furthermore, as shown, the energy storage system 400 includes a plurality of energy storage devices 406 arranged in the enclosure 402.

Furthermore, as shown, the energy storage system 400 of FIGS. 7A-7C includes a ventilation system 408. In particular embodiments, as shown, the ventilation system 408 includes an electrical circuit 410 having at least one conductor 412 arranged across the plurality of energy storage devices 406. For example, as shown in FIGS. 7A and 7C (and similar to the embodiment of FIG. 6C), the conductor 412 is a double wire conductor having a first conductive wire 430, a second conductive wire 431, a first insulator 432 around the first conductive wire 430, a second insulator 433 around the second conductive wire 431, and a sheathing 434 around the first and second insulators 432, 433.

Moreover, as shown in FIG. 7A, the ventilation system 408 includes a power source 414 electrically coupled to and powering the electrical circuit 410. Further, as shown in FIG. 7A, the ventilation system 408 includes a thermal vent mechanism 416 positioned adjacent to the vent hole(s) 404. Thus, in an embodiment, during normal operation, the electrical circuit 410 is open, and the thermal vent mechanism 416 covers the vent hole(s) 404. However, during a thermal event (as indicated by thermal symbol 418), the thermal event causes the electrical circuit 410 to close such that the power source 414 activates the thermal vent mechanism 416 to expose the vent hole(s) 404 to vent fumes outside of the aircraft 10. Accordingly, in particular embodiments, during the thermal event, the thermal event compromises the first insulator 432 and/or the second insulator 433, which causes the first and second conductive wires 430, 431 to touch and close the electrical circuit 410. In other words, the two-wire system utilizes low temperature insulation and detection of the thermal event is created by completion of the electrical circuit 410 between the first and second conductive wires 430, 431. In such embodiments, as shown, the ventilation system 408 may also include one or more insulated clamps 438. However, similar to the embodiment of FIG. 7A, such clamps 438 may or may not be grounded.

In further embodiments, as shown in FIGS. 7A and 7B, the thermal vent mechanism 416 may include a hinged door 420 that can be actuated by an actuator 444, such as a thermal fuse or an electro-magnet. Moreover, as shown in FIG. 7A, the ventilation system 408 may also include a latching relay 424 electrically coupled to the hinged door 420, e.g., via one or more electrical connections 426 (FIG. 7B). As such, during the thermal event, the latching relay 424 actuates the hinged door 420 to open the hinged door 420 to vent the fumes outside of the aircraft 10. Moreover, in an embodiment, as shown in FIG. 7B, the hinged door 420 is secured adjacent to the vent hole(s) 404 via a spring actuated lock 422.

More particularly, during normal operations, the hinged door 420 is configured to seal the vent hole(s) 404 shut. However, when the hinged door 420 is pushed open via the actuator 444, due to the thermal event, the fumes are allowed to escape the enclosure 402 and can escape outside of the aircraft 10 via, e.g., a vent tube 428. For example, as shown in FIG. 7A, the vent tube 428 is arranged between the vent hole(s) 404 of the enclosure 402 and the outside of the aircraft 10. Thus, the vent tube 428 is configured for venting the fumes from within the enclosure 402 to the outside of the aircraft 10 during the thermal event. In additional embodiments, and still referring to FIG. 7A, the ventilation system 408 may also include one or more one-way vents 440 in the enclosure 402 to prevent the fumes from escaping into a cabin 442 of the aircraft 10.

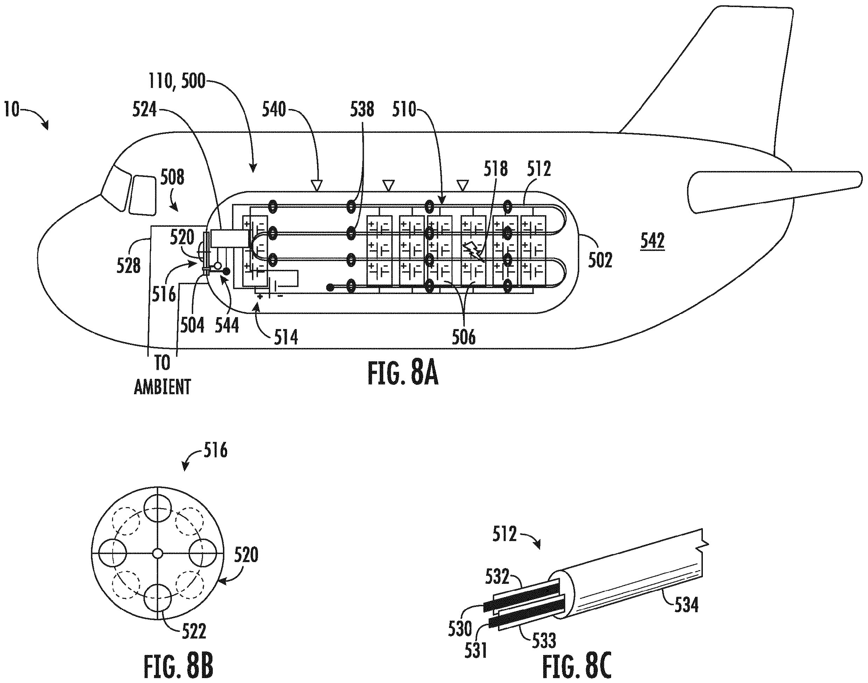

In yet another embodiment, as shown in FIGS. 8A-8C, a schematic diagram of another embodiment of an energy storage system 500, such as the energy storage system 110, for the aircraft 10 in accordance with an exemplary aspect of the present disclosure. In particular, as shown, the energy storage system 500 includes an enclosure 502 having at least one vent hole 504. Furthermore, as shown, the energy storage system 500 includes a plurality of energy storage devices 506 arranged in the enclosure 502.

Furthermore, as shown, the energy storage system 500 of FIGS. 8A-8C includes a ventilation system 508. In particular embodiments, as shown, the ventilation system 508 includes an electrical circuit 510 having at least one conductor 512 arranged across the plurality of energy storage devices 506. For example, as shown in FIGS. 8A and 8C (and similar to the embodiment of FIGS. 6C and 7C), the conductor 512 is a double wire conductor having a first conductive wire 530, a second conductive wire 531, a first insulator 532 around the first conductive wire 530, a second insulator 533 around the second conductive wire 531, and a sheathing 534 around the first and second insulators 532, 533.

Moreover, as shown in FIG. 8A, the ventilation system 508 includes a power source 514 electrically coupled to and powering the electrical circuit 510. Further, as shown in FIG. 8A, the ventilation system 508 includes a thermal vent mechanism 516 positioned adjacent to the vent hole(s) 504. Thus, in an embodiment, during normal operation, the electrical circuit 510 is open and the thermal vent mechanism 516 covers the vent hole(s) 504. However, during a thermal event (as indicated by thermal symbol 518), the thermal event causes the electrical circuit 510 to close such that the power source 514 activates the thermal vent mechanism 516 to expose the vent hole(s) 504 to vent fumes outside of the aircraft 10. Accordingly, in particular embodiments, during the thermal event, the thermal event compromises the first insulator 532 and/or the second insulator 533, which causes the first and second conductive wires 530, 531 to touch and close the electrical circuit 510. In other words, the two-wire system utilizes low temperature insulation and detection of the thermal event is created by completion of the electrical circuit 510 between the first and second conductive wires 530, 531. In such embodiments, as shown, the ventilation system 508 may also include one or more insulated clamps 538. However, similar to the embodiment of FIG. 8A, such clamps 538 may or may not be grounded.

In further embodiments, as shown in FIGS. 8A and 8B, the thermal vent mechanism 516 may include one or more rotary discs 520 having at least one disc hole 522. In such embodiments, the rotary disc 520 may be actuated by an actuator 544, such as a thermal fuse or an electro-magnet. Moreover, in such embodiments, thermal vent mechanism 516 may also include a rotary spring 526 (FIG. 8A) configured to actuate the rotary disc 520 to position the disc hole(s) 522 with respect to the vent hole(s) 504. Moreover, as shown in FIG. 8A, the ventilation system 508 may also include a latching relay 524 electrically coupled to the rotary disc 520. As such, during the thermal event, the latching relay 524 is configured to actuate the rotary disc 520 to open the rotary disc 520 to vent the fumes outside of the aircraft 10.

Accordingly, during normal operations, the rotary disc 520 is configured to seal the vent hole(s) 504 shut. However, when the rotary disc 520 is pushed open via the actuator 544, due to the thermal event, the fumes are allowed to escape the enclosure 502 and can escape outside of the aircraft 10 via, e.g., a vent tube 528. For example, as shown in FIG. 8A, the vent tube 528 is arranged between the vent hole(s) 504 of the enclosure 502 and the outside of the aircraft 10. Thus, the vent tube 528 is configured for venting the fumes from within the enclosure 502 to the outside of the aircraft 10 during the thermal event. In additional embodiments, and still referring to FIG. 8A, the ventilation system 508 may also include one or more one-way vents 540 in the enclosure 502 to prevent the fumes from escaping into a cabin 542 of the aircraft 10.

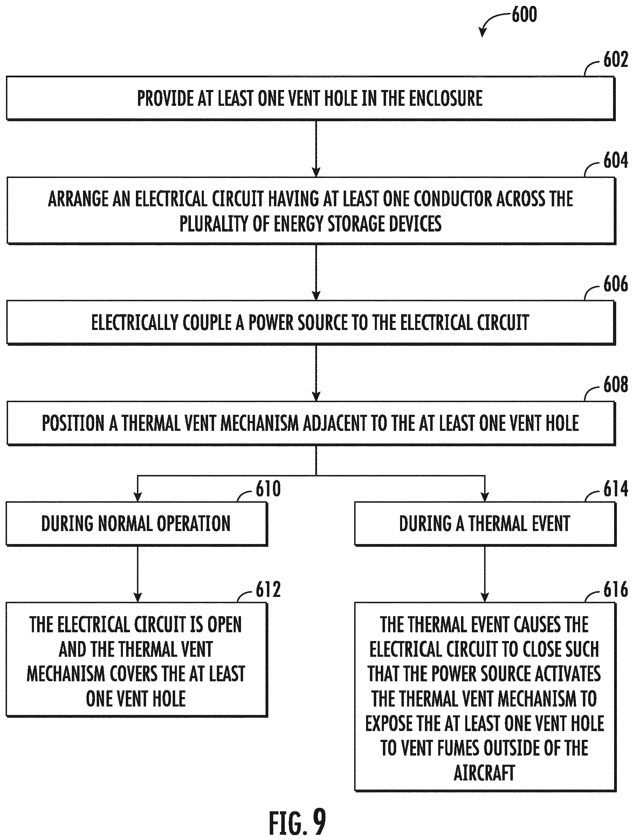

Referring now to FIG. 9, a flow diagram is provided of a method 600 of ventilating an energy storage system, such as energy storage system 110, of an aircraft to a location outside of the aircraft in accordance with an exemplary aspect of the present disclosure. Though the method 600 of FIG. 9 may be utilized with the energy storage system 110 described above with reference to FIGS. 1 through 8C, in other exemplary aspects, the method 600 may additionally or alternatively be utilized with other energy storage systems. In addition, although FIG. 9 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As depicted, the method 600 generally includes, at (602), providing at least one vent hole in the enclosure. As shown at (604), the method includes arranging an electrical circuit having at least one conductor across the plurality of energy storage devices. Further, as shown at (606), the method 600 includes electrically coupling a power source to the electrical circuit. Moreover, as shown at (608), the method includes positioning a thermal vent mechanism adjacent to the at least one vent hole. Thus, as shown at (610) and (612), during normal operation, the electrical circuit is open, and the thermal vent mechanism covers the at least one vent hole. In addition or in the alternative, as shown at (614) and (616), during a thermal event, the thermal event causes the electrical circuit to close such that the power source activates the thermal vent mechanism to expose the at least one vent hole to vent fumes outside of the aircraft.

Further aspects of the present disclosure are provided by the subject matter of the following clauses:

An energy storage system for an aircraft, the energy storage system comprising: an enclosure comprising at least one vent hole; a plurality of energy storage devices arranged in the enclosure; a ventilation system comprising: an electrical circuit comprising at least one conductor arranged across the plurality of energy storage devices; a power source electrically coupled to and powering the electrical circuit; and a thermal vent mechanism positioned adjacent to the at least one vent hole, wherein, during normal operation, the electrical circuit is open and the thermal vent mechanism covers the at least one vent hole, and wherein, during a thermal event, the thermal event causes the electrical circuit to close such that the power source activates the thermal vent mechanism to expose the at least one vent hole to vent fumes outside of the aircraft.

The energy storage system of any preceding clause, wherein the thermal vent mechanism comprises a thermal membrane having a resistance heating wire embedded therein.

The energy storage system of any preceding clause, wherein the ventilation system further comprises a latching relay electrically coupled to the thermal vent mechanism, wherein, during the thermal event, the resistance heating wire heats and melts the thermal membrane, thereby activating the thermal vent mechanism to expose the at least one vent hole to vent fumes outside of the aircraft.

The energy storage system of any preceding clause, wherein the thermal vent mechanism comprises a hinged door actuated by an actuator.

The energy storage system of any preceding clause, wherein the ventilation system further comprises a latching relay electrically coupled to the hinged door, wherein, during the thermal event, the latching relay actuates the hinged door to open the hinged door to vent the fumes outside of the aircraft.

The energy storage system of any preceding clause, wherein the hinged door is secured adjacent to the at least one vent hole via a spring actuated lock.

The energy storage system of any preceding clause, wherein the thermal vent mechanism comprises one or more rotary discs comprising at least one disc hole, the one or more rotary discs being actuated by an actuator, the thermal vent mechanism further comprising a rotary spring configured to actuate the one or more rotary discs to position the at least one disc hole with respect to the at least one vent hole.

The energy storage system of any preceding clause, wherein the at least one conductor comprises a first conductive wire, a first insulator around the first conductive wire, and a sheathing around the first insulator, wherein, during the thermal event, the thermal event compromises the first insulator, thereby faulting the first conductive wire to ground and closing the electrical circuit.

The energy storage system of any preceding clause, wherein the first conductive wire is faulted to ground via one or more insulated clamps.

The energy storage system of any preceding clause, wherein the at least one conductor comprises the first conductive wire and a second conductive wire, the first insulator being around the first conductive wire and a second insulator being around the second conductive wire, the sheathing being around the first and second insulators, wherein, during the thermal event, the thermal event compromises at least one of the first insulator and the second insulator, thereby causing the first and second conductive wires to touch and close the electrical circuit.

The energy storage system of any preceding clause, wherein at least one of the first insulator and the second insulator is constructed of a cellulose fiber material, a foam material, or a polymer material.

The energy storage system of any preceding clause, wherein the ventilation system further comprises at least one vent tube arranged between the at least one vent hole and outside of the aircraft, the at least one vent tube configured for venting the fumes from within the enclosure to outside of the aircraft during the thermal event.

The energy storage system of any preceding clause, wherein the ventilation system further comprises one or more one-way vents in the enclosure to prevent the fumes from escaping into a cabin of the aircraft.

The energy storage system of any preceding clause, wherein the ventilation system is insensitive to distance between a location of the thermal event and the at least one vent hole and pressure differences at altitude.

The energy storage system of any preceding clause, wherein the plurality of energy storage devices comprises at least one of one or more batteries or one or more ultracapacitors.

The energy storage system of any preceding clause, wherein the electrical circuit is a passive electrical circuit.

The energy storage system of any preceding clause, wherein the electrical circuit is an active electrical circuit.

A ventilation system for an energy storage system for an aircraft, the ventilation system comprising: an electrical circuit comprising at least one conductor for arranging across a plurality of energy storage devices; a power source electrically coupled to and powering the electrical circuit; and a thermal vent mechanism positioned adjacent to at least one vent hole on an enclosure containing the plurality of energy storage devices, wherein, during normal operation, the electrical circuit is open and the thermal vent mechanism covers the at least one vent hole, and wherein, during a thermal event, the thermal event causes the electrical circuit to close such that the power source activates the thermal vent mechanism to expose the at least one vent hole to vent fumes outside of the aircraft.

The ventilation system of any preceding clause, wherein the thermal vent mechanism comprises a thermal membrane having a resistance heating wire embedded therein, and wherein the ventilation system further comprises a latching relay electrically coupled to the thermal vent mechanism, wherein, during the thermal event, the resistance heating wire heats and melts the thermal membrane, thereby activating the thermal vent mechanism to expose the at least one vent hole to vent fumes outside of the aircraft.

A method of ventilating an energy storage system of an aircraft to a location outside of the aircraft, the energy storage system having a plurality of energy storage devices being arranged in an enclosure, the method comprising: providing at least one vent hole in the enclosure; arranging an electrical circuit having at least one conductor across the plurality of energy storage devices; electrically coupling a power source to the electrical circuit; positioning a thermal vent mechanism adjacent to the at least one vent hole, wherein, during normal operation, the electrical circuit is open and the thermal vent mechanism covers the at least one vent hole, and wherein, during a thermal event, the thermal event causes the electrical circuit to close such that the power source activates the thermal vent mechanism to expose the at least one vent hole to vent fumes outside of the aircraft.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An energy storage system (200, 300, 400, 500) for an aircraft (10), the energy storage system (200, 300, 400, 500) comprising:
an enclosure (202, 302, 402, 502) comprising at least one vent hole (204, 304, 404, 504);
a plurality of energy storage devices (206, 206, 406, 506) arranged in the enclosure (202, 302, 402, 502);
a ventilation system comprising:
an electrical circuit (210, 310, 410, 510) comprising at least one conductor (212, 312, 412, 512) arranged across the plurality of energy storage devices (206, 206, 406, 506);
a power source (214, 314, 414, 514) electrically coupled to and powering the electrical circuit (210, 310, 410, 510); and
a thermal vent mechanism (216, 316, 416, 516) positioned adjacent to the at least one vent hole (204, 304, 404, 504),
wherein, during normal operation, the electrical circuit (210, 310, 410, 510) is open and the thermal vent mechanism (216, 316, 416, 516) covers the at least one vent hole (204, 304, 404, 504), and
wherein, during a thermal event, the thermal event causes the electrical circuit (210, 310, 410, 510) to close such that the power source (214, 314, 414, 514) activates the thermal vent mechanism (216, 316, 416, 516) to expose the at least one vent hole (204, 304, 404, 504) to vent fumes outside of the aircraft (10).

2. The energy storage system (200, 300, 400, 500) of claim 1, wherein the thermal vent mechanism (216, 316, 416, 516) comprises a thermal membrane (220, 320) having a resistance heating wire (222, 322) embedded therein.

3. The energy storage system (200, 300, 400, 500) of claim 2, wherein the ventilation system further comprises a latching relay (224, 324, 424, 524) electrically coupled to the thermal vent mechanism (216, 316, 416, 516), wherein, during the thermal event, the resistance heating wire (222, 322) heats and melts the thermal membrane (220, 320), thereby activating the thermal vent mechanism (216, 316, 416, 516) to expose the at least one vent hole (204, 304, 404, 504) to vent fumes outside of the aircraft (10).

4. The energy storage system (200, 300, 400, 500) of any preceding claim, wherein the thermal vent mechanism (216, 316, 416, 516) comprises a hinged door (420) actuated by an actuator (444, 544).

5. The energy storage system (200, 300, 400, 500) of claim 4, wherein the ventilation system further comprises a latching relay (224, 324, 424, 524) electrically coupled to the hinged door (420), wherein, during the thermal event, the latching relay (224, 324, 424, 524) actuates the hinged door (420) to open the hinged door (420) to vent the fumes outside of the aircraft (10).

6. The energy storage system (200, 300, 400, 500) of claim 4 or 5,
wherein the hinged door (420) is secured adjacent to the at least one vent hole (204, 304, 404, 504) via a spring actuated lock (422).

7. The energy storage system (200, 300, 400, 500) of any preceding claim, wherein the thermal vent mechanism (216, 316, 416, 516) comprises one or more rotary discs (520) comprising at least one disc hole (522), the one or more rotary discs (520) being actuated by an actuator (444, 544), the thermal vent mechanism (216, 316, 416, 516) further comprising a rotary spring (526) configured to actuate the one or more rotary discs (520) to position the at least one disc hole (522) with respect to the at least one vent hole (204, 304, 404, 504).

8. The energy storage system (200, 300, 400, 500) of any preceding claim, wherein the at least one conductor (212, 312, 412, 512) comprises a first conductive wire (230, 330, 430, 530), a first insulator (232, 332, 432, 532) around the first conductive wire (230, 330, 430, 530), and a sheathing (236, 336, 436, 536) around the first insulator (232, 332, 432, 532),
wherein, during the thermal event, the thermal event compromises the first insulator (232, 332, 432, 532), thereby faulting the first conductive wire (230, 330, 430, 530) to ground and closing the electrical circuit (210, 310, 410, 510).

9. The energy storage system (200, 300, 400, 500) of claim 8, wherein the first conductive wire (230, 330, 430, 530) is faulted to ground via one or more insulated clamps (238, 338, 438, 538).

10. The energy storage system (200, 300, 400, 500) of claim 8 or 9, wherein the at least one conductor (212, 312, 412, 512) comprises the first conductive wire (230, 330, 430, 530) and a second conductive wire (331, 431, 531), the first insulator (232, 332, 432, 532) being around the first conductive wire (230, 330, 430, 530) and a second insulator (333, 433, 533) being around the second conductive wire (331, 431, 531), the sheathing (236, 336, 436, 536) being around the first (232, 332, 432, 532) and second (333, 433, 533) insulators,
wherein, during the thermal event, the thermal event compromises at least one of the first insulator (232, 332, 432, 532) and the second insulator (333, 433, 533), thereby causing the first (331, 431, 531) and second (331, 431, 531) conductive wires to touch and close the electrical circuit (210, 310, 410, 510).

11. The energy storage system (200, 300, 400, 500) of claim 10, wherein at least one of the first insulator (232, 332, 432, 532) and the second insulator (333, 433, 533) is constructed of a cellulose fiber material, a foam material, or a polymer material.

12. The energy storage system (200, 300, 400, 500) of any preceding claim, wherein the ventilation system further comprises at least one vent tube (228, 328, 428, 528) arranged between the at least one vent hole (204, 304, 404, 504) and outside of the aircraft (10), the at least one vent tube (228, 328, 428, 528) configured for venting the fumes from within the enclosure (202, 302, 402, 502) to outside of the aircraft (10) during the thermal event.

13. The energy storage system (200, 300, 400, 500) of any preceding claim, wherein the ventilation system further comprises one or more one-way vents in the enclosure (202, 302, 402, 502) to prevent the fumes from escaping into a cabin of the aircraft (10).

14. The energy storage system (200, 300, 400, 500) of any preceding claim, wherein the plurality of energy storage devices (206, 206, 406, 506) comprises at least one of one or more batteries or one or more ultracapacitors.

15. A method (600) of ventilating an energy storage system (200, 300, 400, 500) of an aircraft (10) to a location outside of the aircraft (10), the energy storage system (200, 300, 400, 500) having a plurality of energy storage devices (206, 206, 406, 506) being arranged in an enclosure (202, 302, 402, 502), the method (600) comprising:
providing at least one vent hole (204, 304, 404, 504) in the enclosure (202, 302, 402, 502);
arranging an electrical circuit (210, 310, 410, 510) having at least one conductor (212, 312, 412, 512) across the plurality of energy storage devices (206, 206, 406, 506);
electrically coupling a power source (214, 314, 414, 514) to the electrical circuit (210, 310, 410, 510);
positioning a thermal vent mechanism (216, 316, 416, 516) adjacent to the at least one vent hole (204, 304, 404, 504),
wherein, during normal operation, the electrical circuit (210, 310, 410, 510) is open and the thermal vent mechanism (216, 316, 416, 516) covers the at least one vent hole (204, 304, 404, 504), and
wherein, during a thermal event, the thermal event causes the electrical circuit (210, 310, 410, 510) to close such that the power source (214, 314, 414, 514) activates the thermal vent mechanism (216, 316, 416, 516) to expose the at least one vent hole (204, 304, 404, 504) to vent fumes outside of the aircraft (10).
